# EUROPÄISCHE PATENTSCHRIFT

(11) **EP 1 402 077 B1**
(45) Veröffentlichungstag und Bekanntmachung des Hinweises auf die Patenterteilung: **29.06.2005**
(21) Anmeldenummer: 02712607.7
(22) Anmeldetag: 02.04.2002
(51) Int. Cl.: C22B 1/243, C22B 7/02, C04B 28/26, C04B 18/04

(54) **VERFAHREN ZUR VERFESTIGUNG VON WALZENZUNDER**
METHOD FOR COMPACTING ROLLING-MILL SCALE
PROCEDE DE COMPACTAGE DE BATTITURES

(30) Priorität: 02.04.2001 AT 2442001 U
(43) Veröffentlichungstag der Anmeldung: 31.03.2004
(73) Patentinhaber: Ferrobrixx AG, 83684 Tegernsee (DE)
(72) Erfinder: Ferrobrixx AG, 83684 Tegernsee (DE)
(74) Vertreter: KLIMENT & HENHAPEL
(86) Internationale Anmeldenummer: PCT/AT2002/000099
(87) Internationale Veröffentlichungsnummer: WO 2002/079527

(56) Entgegenhaltungen:
- EP-A- 1 160 218
- DE-C- 3 727 576
- US-A- 4 859 367
- US-A- 5 501 719
- US-A- 5 556 457
- US-A- 5 820 668
- DATABASE WPI Section Ch, Week 199822 Derwent Publications Ltd., London, GB; Class M24, AN 1998-249662 XP002203125 & RU 2 092 590 C (LEBEDINSK MINING ENRICH COMBINE STOCK CO), 10. Oktober 1997 (1997-10-10)
- DATABASE WPI Section Ch, Week 198008 Derwent Publications Ltd., London, GB; Class M24, AN 1980-13649C XP002203126 & JP 55 003824 A (NAKAYAMA SEIKOSHO), 11. Januar 1980 (1980-01-11)

## Beschreibung

Die vorliegende Erfindung bezieht sich auf Verfahren zur Herstellung neuer Werkstoffe unter Verwendung von Walzenzunder, Gichtstaub oder deren Schlämme, sowie andere Metalloxid- und metallhaltige Stäube, Schlämme und Gruße (zB. FeCr, FeMn, NiO₂, FeSi, SiC, etc.).

Diese Materialien fallen als Abfallprodukte in der metallverarbeitenden Industrie an, etwa als Walzzunder bei Walzvorgängen in der Stahlproduktion oder auch als Schleifspäne oder andere Feinstspäne mit einer Körnung von unter 1 mm. Ständig strenger werdende Umweltauflagen und Gesetze einerseits und der wachsende Kostendruck andererseits veranlassen diese Unternehmen immer mehr ihre metallischen Abfälle nicht weiter zu deponieren, sondern einer, wenn möglich lukrativen Wiederverwendung zuzuführen. Für die genannten Abfallprodukte existieren für eine solche Wiederverwendung -allerdings noch keine, bzw. schlechte Möglichkeiten.

Auf der anderen Seite sieht sich die Bauwirtschaft aus vielerlei Gründen mit ständig abnehmenden Gewinnspannen konfrontiert, die einen starken Bedarf nach preisgünstigen Alternativprodukten, wie etwa Betonersatzstoffen, schaffen. Neben der Anforderung möglichst preisgünstig zu bauen, wird von der Bauwirtschaft auch die Einhaltung stets strengerer Sicherheitsbestimmungen und Baunormen gefordert.

Ziel der Erfindung ist es, das Problem der Entsorgung bestimmter Abfallstoffe der metallverarbeitenden Industrie durch Herstellung eines in der Bauwirtschaft als Betonersatzstoff verwendbaren Werkstoffes, sogenanntes Artolith-Erz, zu lösen. Die durch die in Anspruch 1 und 2 vorgeschlagenen Verfahren erzeugten Werkstoffe zeichnen sich durch hervorragende Druckfestigkeiten sowie niedrige Herstellungskosten aus.

Herkömmlicher Beton besteht aus einer Mischung aus Wasser, Sand und Kies, sowie Zement als Bindemittel. Zement ist wiederum in unterschiedlichen Güteklassen erhältlich und enthält variierende Anteile an löslicher Kieselsäure (SiO₂), Tonerde (Al₂O₃), Eisenoxid (Fe₂O₃) und Kalk (CaO). Typische Druckfestigkeiten für herkömmlichen Beton liegen bei 15 - 20 N/mm², bei Spezialanwendungen können auch Werte über 40 N/mm² gefordert sein.

US-A-5 820 668 beschreibt eine Bindemittelzusammensetzung von 60-90% Gerüstsilikate, Rest SiO₂ und Al₂O₃ für die Wiederverwertung von Abfallmaterial wie Walzenzunder und Gichtstäuben.

Das erfindungsgemäße Verfahren ermöglicht es nun, als Rohstoffe lediglich Walzenzunder, Lehm sowie Fließhilfsmittel, wie etwa wahlweise Flussspat, Gerüstsilikate, Schichtsilikate, Kalziumcarbonat oder Feldspäte, zu verwenden. Lehm ist eine Mischung aus Ton (Korngröße < 2µm), Schluff (Feinstsand; Korngröße 2 - 20µm) und Sand (Korngröße > 20µm), die auch gröbere Bestandteile wie Kies, Schotter oder Steine enthalten kann. Lehm weist je nach Fundort unterschiedliche Zusammensetzungen auf, sodass durch die Zugabe von Fließhilfsmittel die Eigenschaften für den weiteren Verarbeitungsprozess optimiert werden können. Lehm ist billig und reichlich verfügbar. Bei Sand- und Kiesgruben entsteht Lehm als reichlich verfügbares Abfallprodukt. Auch auf den meisten Baustellen in Mitteleuropa fällt Lehm beim Aushub der Keller und/oder der Fundamente an. Enthält er nicht zuviel Ton und keine zu großen Gesteinspartikel, so kann er im erdfeuchten Zustand meist unmittelbar für das erfindungsgemäße Verfahren verwendet werden. Es besteht somit die reizvolle Möglichkeit, den lehmhaltigen Aushub von Baustellen für die Herstellung von Betonersatzelementen für dieselbe Baustelle zu verwenden.

Für die Herstellung von Artolith-Erz auf Lehm-Basis gemäß des erfindungsgemäßen Verfahrens hat sich eine Mischung aus 87,8 - 90 Gewichtsprozent, vorzugsweise 88 Gewichtsprozent Walzenzunder, Gichtstaub oder deren Schlämme, oder anderer Metalloxid- und metallhaltiger Stäube, Schlämme und Gruße, 7 - 11 Gewichtsprozent, vorzugsweise 11 Gewichtsprozent Lehm sowie 0.8 - 1.2 Gewichtsprozent, vorzugsweise 1 Gewichtsprozent Fließhilfsmittel herausgestellt. Diese Mischung muss gut homogenisiert werden, bevor sie in Formen eingebracht werden kann. Als Formgebungsarten kommen vor allem Verpressen der Masse im trockenen oder leicht feuchten Zustand, Verformen im plastischen Zustand und Vergießen im flüssigen Zustand in Betracht. Auch Strangpressverfahren können eingesetzt werden. Die Formlinge können vor dem Brennvorgang vorgetrocknet werden.

Beim eigentlichen Brennvorgang werden die Formlinge bei mindestens 800°C gebrannt, wobei mit ansteigender Brenntemperatur zunehmende Festigkeiten des Endproduktes erzielt werden können (siehe Beispiel 1 und 2). Es wird dabei nicht nur das restliche Wasser ausgetrieben, sondern auch jene Ölspuren, die bei der Verwendung von Walzenzunder als Abfallprodukt der metallverarbeitenden Industrie unvermeidlich sind. Das Endprodukt kann somit als ölfreies Artolith-Erz bezeichnet werden, das über Festigkeiten von 15 bis annähernd 50 N/mm² verfügt. Die überraschend hohen Festigkeiten beruhen auf der Wirkung des im Walzenzunder enthaltenen Eisenoxids. Die Bildung des Walzenzunders, etwa bei Walzvorgängen, verläuft unter intensivem Kontakt mit dem Sauerstoff der Luft, sodass das Eisen zu ca. 70% als Eisenoxid (Fe₂O₃) vorliegt. Die oxidierte Form begünstigt Adhäsionsvorgänge, wodurch der Walzenzunder nicht nur "passiv" durch das Bindemittel verfestigt wird, sondern bereits von sich aus Festigkeit entwickelt.

Anspruch 2 betrifft ein alternatives Verfahren zur Herstellung des neuen Werkstoffes aus Walzenzunder, bei dem die Aushärtung im Hochofen erfolgt. Es hat sich hierbei eine Mischung aus 69 - 77 Gewichtsprozent, vorzugsweise 73 Gewichtsprozent Walzenzunder, Gichtstaub oder deren Schlämme, oder anderer Metalloxid- und metallhaltiger Stäube, Schlämme und Gruße, 3 - 5 Gewichtsprozent, vorzugsweise 4 Gewichtsprozent Klinker, 14 - 18 Gewichtsprozent, vorzugsweise 16 Gewichtsprozent Müllverbrennungsschlacke und 6 - 8 Gewichtsprozent, vorzugsweise 7 Gewichtsprozent Wasser als vorteilhaft herausgestellt. Auch die bei diesem Verfahren verwendeten Rohstoffe sind billig und reichlich verfügbar, wobei besonders auf die Möglichkeit der Verwendung von Müllschlacke verwiesen wird. Es stellt ein latent hydraulisches Bindemittel dar, das ein langsameres Einstellen der Festigkeit bewirkt, wodurch aber die letztendliche Festigkeit nicht vermindert wird.

Bei der Verarbeitung im Hochofen ist allerdings darauf zu achten, dass der Ölgehalt des Walzenzunders mitunter Probleme bereiten kann. So sind etwa Hochöfen westlicher Bauweise mit Sinteranlagen ausgestattet, wobei die Rückführung von Abgasen (besonders die darin enthaltenen Kohlenwasserstoffe) zu unerwünschten Reaktionen führen kann. In Hochöfen östlicher Provenienz, die meistens über keine Sinteranlagen verfügen, stellt sich dieses Problem nicht, sodass in solchen Anlagen auch ölhaltiger Walzenzunder ohne Komplikationen verarbeitet werden kann.

Die folgenden Ausführungsbeispiele des erfindungsgemäßen Verfahrens sollen die Erfindung besser illustrieren, sind jedoch in keiner Weise einschränkend zu verstehen.

### Beispiel 1:

Leicht ölhaltiger Warmwalzzunder mit einer anfänglichen Schüttdichte von 1.70 kg/l und einer Feuchte (atro) von 39.6% wurde mit 10 Masseprozent KBS2 (Keramisches Bindesystem 2) zu einer schlammigen Masse vermengt. Der Warmwalzzunder wurde dabei auf 0.9% Feuchte (atro) getrocknet, KBS2 mit einer Schlagkreuzmühle (lmm-Sieb) zerkleinert und mit dem Zunder vermischt, gewalzt und 300 g Wasser zugegeben. Es wurden für den Brennvorgang drei Proben bereitet, deren durchschnittliche Materialzusammensetzung in Tabelle 1 gegeben ist (die durchschnittliche Schüttdichte und die Infrarotfeuchte wurden rechnerisch ermittelt):

**Tabelle 1:**

| Materialzusammensetzung | Vol. (%) | Massen | | IR- F. (%) | Massenanteile | | Schütt-Dichte (kg/l) | Vol.-Anteil (1) |
|---|---|---|---|---|---|---|---|---|
| | | Nass (%) | atro. (%) | | Atro. (kg) | Nass (kg) | | |
| Warmwalzzunder | 89,92 | 90,00 | 90,18 | 0,90 | 2,97 | 2,999 | 1,15 | 2,61 |
| KBS2 (M&P), gemahlen | 10,08 | 10,00 | 9,82 | 3,00 | 0,32 | 0,333 | 1,14 | 0,29 |
| Summen/ Durchschnitte | 100,0 | 100,0 | 100,0 | 1,11 | 3,30 | 3,332 | 1,15 | 2,90 |

Die Proben wurden 13 Stunden lang bei einer Brenntemperatur von 900°C gebrannt. Bei einer Brenntemperatur von 900°C besitzt der neue Werkstoff eine rote, ziegelähnliche Farbe, die bei zunehmender Brenntemperatur zunehmend dunkler wird, bis sie bei etwa 1400°C annähernd schwarz ist. Tabelle 2 zeigt die Durchschnittswerte für Glühverlust, Dichte, Druckfestigkeit sowie der Schwindung:

**Tabelle 2:**

| Bezeichnung | ME | Wert |
|---|---|---|
| Glühverlust | % | 0,67 |
| Dichte (abs.tro.) | kg/dm³ | 2,627 |
| **Druckfestigkeit** | **N/mm**^{**2**} | **21,07** |
| Trockenschwindung | % | 0,83 |
| Brennschwindung | % | 0,67 |
| Gesamtschwindung | % | 1,50 |

Bemerkenswert ist der Wert von ca. 21 N/mm² für die Druckfestigkeit, der durchaus im Bereich von qualitativem Beton liegt. Das Endprodukt eignet sich somit tadellos als Betonersatzstoff.

### Beispiel 2:

Dieselbe Materialzusammensetzung wie in Beispiel 1 wird verwendet, jedoch über 13 Stunden bei einer Brenntemperatur von 1000°C gebrannt. Tabelle 3 zeigt für diesen Fall die Durchschnittswerte für Glühverlust, Dichte, Druckfestigkeit sowie der Schwindung:

**Tabelle 3:**

| Bezeichnung | ME | Wert |
|---|---|---|
| Glühverlust | % | 0,64 |
| Dichte (abs.tro.) | kg/dm³ | 2,627 |
| **Druckfestigkeit** | **N/mm**^{**2**} | **48,30** |
| Trockenschwindung | % | 0,77 |
| Brennschwindung | % | 1,55 |
| Gesamtschwindung | % | 2,30 |

Wie die Ergebnisse zeigen, kann die Druckfestigkeit bei Brenntemperaturen von 1000°C auf annähernd 50 N/mm² gesteigert werden. Das unter diesen Ausführungsbedingungen des erfindungsgemäßen Verfahrens erzeugte Endprodukt ist auch für anspruchsvolle Einsätze, wie etwa im Hochbau, geeignet.

Das erfindungsgemäße Verfahren stellt somit einen Betonersatzstoff zur Verfügung, der nicht nur qualitativ vergleichbar mit herkömmlichem Beton ist, sondern auch ungleich kostengünstiger hergestellt werden kann.

## Patentansprüche

1. Verfahren zur Verfestigung von Walzenzunder, Gichtstaub oder deren Schlämme sowie anderer Metalloxid- und metallhaltiger Stäube, Schlämme und Gruße zur Herstellung neuer Werkstoffe, insbesondere Baumaterialien, **dadurch gekennzeichnet, dass** eine Mischung aus
87.8 - 90 Gewichtsprozent, vorzugsweise 88 Gewichtsprozent Walzenzunder, Gichtstaub oder deren Schlämme, oder anderer Metalloxid- und metallhaltiger Stäube, Schlämme und Gruße,
7 - 11 Gewichtsprozent, vorzugsweise 11 Gewichtsprozent Lehm, sowie
0.8 - 1.2 Gewichtsprozent, vorzugsweise 1 Gewichtsprozent Gerüstsilikate hergestellt wird,
die in Formen eingebracht und bei mindestens 800°C gebrannt wird.

2. verfahren zur Verfestigung von Walzenzunder, Gichtstaub oder deren Schlämme sowie anderer Metalloxid- und metallhaltiger Stäube, Schlämme und Gruße zur Herstellung neuer Werkstoffe, insbesondere Baumaterialien, **dadurch gekennzeichnet, dass** eine Mischung aus
69 - 77 Gewichtsprozent, vorzugsweise 73 Gewichtsprozent Walzenzunder, Gichtstaub oder deren Schlämme, oder anderer Metalloxid- und metallhaltiger Stäube, Schlämme und Gruße,
3 - 5 Gewichtsprozent, vorzugsweise 4 Gewichtsprozent Klinker,
14 - 18 Gewichtsprozent, vorzugsweise 16 Gewichtsprozent Müllverbrennungsschlacke und
6 - 8 Gewichtsprozent, vorzugsweise 7 Gewichtsprozent Wasser hergestellt wird.

## Claims

1. A method for compacting roll scale, flue dust or their sludge as well as other metal-oxide and metal-containing dusts, sludge and breezes for producing new materials, especially building materials, **characterised in that** a mixture of 87.8 to 90 per cent by weight, preferably 88 per cent by weight of roll scale, flue dust or their sludge or other metal-oxide and metal-containing dusts, sludge and breezes
7 to 11 per cent by weight, preferably 11 per cent by weight of loam, and 0.8 to 1.2 per cent by weight, preferably 1 per cent by weight of tectosilicate is produced which are introduced into moulds and are fired at at least 800°C.

2. A method for compacting roll scale, flue dust or their sludge as well as other metal-oxide and metal-containing dusts, sludge and breezes for producing new materials, especially building materials, **characterised in that** a mixture is produced of 69 to 77 per cent by weight, preferably 73 per cent by weight of roll scale, flue dust or their sludge, or other metal-oxide and metal-containing dusts, sludge and breezes, 3 to 5 per cent by weight, preferably 4 per cent by weight of clinker, 14 to 18 per cent by weight, preferably 16 per cent by weight of incinerator slag, and
6 to 8 per cent by weight, preferably 7 per cent by weight of water.

## Revendications

1. Procédé pour la solidification de pailles de laminage, de poussières de hauts-fourneau ou de leurs boues ainsi que d'autre boues, poussières et fines contenant des oxydes métalliques et des métaux en vue de la fabrication de nouveaux matériaux, en particulier de matériaux de construction, **caractérisé en ce que** l'on produit un mélange de :
- 87,8 % à 90 % du poids, de préférence 88 % du poids de pailles de laminage, de poussières de hauts-fourneau ou de leurs boues, d'autre boues, poussières et fines contenant des oxydes métalliques et des métaux,
- 7 à 11 % du poids, de préférence 11 % du poids d'argile, et
- 0,8 à 1,2 % du poids, de préférence 1 % du poids de tectosilicates,
qui est déposé dans des moules et cuit à 800°C au moins.

2. Procédé pour la solidification de pailles de laminage, de poussières de hauts-fourneau ou de leurs boues ainsi que d'autre boues, poussières et fines contenant des oxydes métalliques et des métaux en vue de la fabrication de nouveaux matériaux, en particulier de matériaux de construction, **caractérisé en ce que** l'on produit un mélange de :
- 69 à 77 % du poids, de préférence 73 % du poids de pailles de laminage, de poussières de hauts-fourneau ou de leurs boues, d'autre boues, poussières et fines contenant des oxydes métalliques et des métaux,
- 3 à 5 % du poids, de préférence 4 % du poids de clinker,
- 14 à 18 % du poids, de préférence 16 % du poids de scories d'incinération d'ordures ménagères et
- 6 à 8 % du poids, de préférence 7 % du poids d'eau.
